# EUROPÄISCHE PATENTSCHRIFT

(11) **EP 2 671 690 B1**
(45) Veröffentlichungstag und Bekanntmachung des Hinweises auf die Patenterteilung: **20.02.2019**
(21) Anmeldenummer: 12171074.3
(22) Anmeldetag: 06.06.2012
(51) Int. Cl.: G05B 9/03, B25J 13/06, B25J 9/16, B25J 19/06

(54) **Auswerteeinheit für ein Sicherheitsschaltgerät und Sicherheitsschaltgerät**
Evaluation unit for a safety switch device and safety switch device
Unité d'évaluation d'un appareil de commutation de sécurité et appareil de commutation de sécurité

(43) Veröffentlichungstag der Anmeldung: 11.12.2013
(73) Patentinhaber: KEBA AG, 4041 Linz (AT)
(72) Erfinder: Schininger, Manfred, 4030 Linz (AT)
(74) Vertreter: Horn Kleimann Waitzhofer Patentanwälte PartG mbB

(56) Entgegenhaltungen:
- EP-A1- 1 705 539
- EP-A2- 1 519 272
- EP-A2- 1 538 651
- WO-A1-2007/090524
- WO-A2-2010/009488
- WO-A2-2011/150440

## Beschreibung

### TECHNISCHES GEBIET

Die Erfindung betrifft eine elektronische Auswerteeinheit für ein Sicherheitsschaltgerät, ein Sicherheitsschaltgerät mit einer entsprechenden Auswerteeinheit und ein Verfahren zum Betreiben des Sicherheitsschaltgerätes. Die Auswerteeinheit umfasst wenigstens zwei Erfassungsbausteine, von denen jeder Signale von mindestens einem Sensor, zum Beispiel einem Taster des Sicherheitsschaltgerätes empfängt, verarbeitet und anschließend eine Freischaltinformation in Form eines Ausgabesignals generiert.

### STAND DER TECHNIK

Im Stand der Technik sind rein mechanische Zustimmtaster, insbesondere dreistufige Zustimmtaster, wie sie zum Beispiel in der EP 1 229 562 B1 beschrieben werden, wohl bekannt und weit verbreitet. Die Zustimmtaster sind in der Regel in der Art zwei- oder mehrkreisig redundant aufgebaut, dass ein einzelnes mechanisches Betätigungselement auf eine Mehrzahl redundanter Kontakte einwirkt. Dadurch kann ein einzelner Kontaktfehler - zum Beispiel ein kleben bleibender Kontakt - nicht zum Verlust der Sicherheit einer Maschine oder Anlage führen, da nur dann eine potenziell gefahrbringende Maschinenfunktion oder Maschinenoperation ausgeführt wird, wenn alle Kontakte bzw. alle Kreise eine Freigabe signalisieren.

Dreistufige Zustimmtaster weisen in der Regel einen ersten Zustand oder Ruhezustand auf, den der Taster ohne einwirkende Betätigungskraft selbständig, insbesondere durch Federkraft, einnimmt und in den er auch wieder selbständig zurückkehrt, wenn er zuvor von einem Bediener aus dem Ruhezustand bewegt wurde. In diesem ersten Zustand des Tasters wird kein Freigabesignal generiert, das heißt, die Maschine oder Anlage kann keine gefahrbringenden Bewegungen oder Funktionen ausführen. Wird der Zustimmtaster vom ersten Zustand in einen zweiten Betätigungszustand überführt, etwa durch Aufbringen einer gewissen ersten Betätigungskraft oder einer dadurch bewirkten Verstellung des Betätigungselementes, so wird dies als aktive, bewusste und gewollte Zustimmung der Bedienperson zur Durchführung der potenziell gefahrbringenden Maschinenoperation gewertet. Die Ausgangskontakte des Zustimmtasters werden geschlossen und die Maschine oder Anlage kann eine potenziell gefahrbringende Maschinenoperation ausführen, zum Beispiel anfahren, Bremsen lösen oder dergleichen. Lässt die Bedienperson den Taster los, so dass dieser in den ersten, unbetätigten Zustand zurückkehrt, oder erhöht sie etwa aufgrund eines plötzlichen Erschreckens in einem Gefahrenfall die Betätigungskraft, so dass der Zustimmtaster vom zweiten Betätigungszustand in einen dritten Betätigungszustand überführt wird, werden die Ausgangskontakte des Zustimmtasters geöffnet und damit über den Sicherheitskreis der Maschine unverzüglich ein sicherer Zustand der Anlage herbeigeführt, in der keine gefahrbringende Maschinenoperation mehr durchgeführt werden kann beziehungsweise eine solche Maschinenoperation umgehend abgebrochen wird.

Der oben erwähnte dritte Betätigungszustand wird auch als Panik-Zustand bezeichnet. Um nach einem Stoppen der Maschine oder Anlage im dritten Betätigungszustand erneut eine potenziell gefahrbringende Maschinenoperation ausführen zu können, genügt es nicht, den Zustimmtaster unmittelbar zurück in den zweiten Betätigungszustand zu überführen. Vielmehr kann eine erneute Freigabe nur dann erfolgen, wenn der Zustimmschalter aus dem dritten Betätigungszustand zurück in den ersten unbetätigten Zustand oder Ruhezustand überführt wird, von wo aus er wieder in den zweiten Betätigungszustand oder Freigabezustand bewegt werden kann.

Aus der AT 408 325 B und AT 411 194 B der Anmelderin ist es bekannt, Zustimmtaster mit anderen als kontaktbehafteten Sensoren zur Erfassung des Betätigungszustandes zu nutzen, im Speziellen optische Sensoren, sowie Drucksensoren. Diese Zustimmtaster können eine elektronische Auswerteschaltung mit potenzialfreien elektronischen Ausgangskontakten oder Ausgangsschaltern für die Einbindung in den Sicherheitskreis einer Maschine oder Anlage aufweisen, sowie Überwachungsschaltungen zum Schutz vor Überspannung oder Überströmen an den Ausgangskontakten.

Bei Zustimmtastern mit zwei oder mehr Kreisen, schalten bei einer Betätigung des Tasters sämtliche Kreise im Idealfall simultan. Denn nur wenn alle Kreise im Wesentlichen gleichzeitig eine Freigabe signalisieren, erfolgt über den Sicherheitskreis der Maschine oder Anlage die Freischaltung der Energie für die Antriebe, für die Lösung von Feststellbremsen oder für die Aufhebung sonstiger Sicherheitsmaßnahmen. Dabei können neben dem Zustimmtaster weitere Sicherheitsschaltgeräte in den Sicherheitskreis eingekoppelt sein, wie zum Beispiel Endschalter zur Überwachung der Geschlossen-Stellung von Schutztüren oder dergleichen. Diese Sicherheitsschaltgeräte weisen potenzialfreie Ausgangskontakte auf und werden in Serienschaltung ebenfalls in den Sicherheitskreis eingebunden.

Der Sicherheitskreis einer Maschine bezeichnet im Allgemeinen die Gesamtheit der elektrischen, elektronischen und elektrotechnischen Sicherheitseinrichtungen einer Anlage, die für die sichere Stillsetzung der Anlage im Gefahrenfall bzw. für die Abwehr eines Gefahrenfalles vorgesehen sind. Der Sicherheitskreis arbeitet dabei unabhängig von der eigentlichen Betriebssteuerung, sodass selbst bei einem Defekt oder Fehler in der Betriebssteuerung eine sichere Stillsetzung der Anlage über den Sicherheitskreis zu jeder Zeit zuverlässig möglich ist.

In modernen und komplexen Anlagen werden die Signale der zwei oder mehreren Kanäle des Sicherheitskreises von einer in speziell sicherer Technik ausgeführten Sicherheitssteuerung oder einem Überwachungsgerät überprüft. Dabei wird vor einer Freigabe von gefahrbringenden Maschinenoperationen nicht nur das Vorliegen aller notwendigen Freigabesignale überprüft, sondern es erfolgt auch eine Überprüfung der Anlage auf etwaige Fehlerzustände, d.h. auf im ordnungsgemäßen Betrieb unzulässigen Signalzuständen im Sicherheitskreis, die auf einen Defekt im Sicherheitskreis hinweisen können. Zum Beispiel wird, wenn über einen definierten Zeitraum hinaus ein notwendiges Zustimmsignal nur auf einem oder nur einem Teil der mehreren Kreise erfasst wird, dies von der Sicherheitssteuerung als Fehlerzustand gewertet, woraufhin die Anlage unverzüglich still gesetzt bzw. in einen Not-Aus Zustand versetzt wird.

Während diese Sicherheitsfunktionalität im Zusammenhang mit Endschaltern und vergleichbaren Schaltelementen durchaus zweckmäßig ist, da hier unzulässige Kombinationen von Signalzuständen auf eine Fehlfunktion hindeuten, ist dies im Fall von handbetätigten Zustimmtastern nicht unbedingt der Fall und kann zu unerwünschten Beeinträchtigungen des ordnungsgemäßen Betriebs führen.

Denn auch wenn die Zustimmkontakte der zwei oder mehreren Kreise von ein und demselben Betätigungselement ausgelöst werden und durch die Ausbildung von mechanischen Rastpunkten ein möglichst rascher und eindeutiger Schaltvorgang begünstigt wird, können die Kontakte mit einem geringen zeitlichen Versatz geschlossen und geöffnet werden.

Unter ungünstigen Umständen und fallweise sogar von der Bedienperson absichtlich provoziert, entsteht bei einem langsamen Betätigungsvorgang und/oder auch bei einer außermittigen Kraftbeaufschlagung und einer daraus resultierenden leichten Verkippung des Betätigungselementes ein zeitlicher Versatz der Zustimmsignale, der über der in der Sicherheitssteuerung festgelegten Toleranzzeit liegt. Dadurch kann es zu einer nicht beabsichtigten Not-Aus-Abschaltung beziehungsweise einer sicherheitsbedingten Maschinenabschaltung kommen. Diese Problematik kann zusätzlich dadurch verstärkt werden, dass die Betätigungsflächen eines Zustimmtasters für gewöhnlich relativ groß ausgebildet ist, um ein bequemes Auslösen bei variierender Handhaltung und/oder bei variierenden Handgrößen des Bedienpersonals zu ermöglichen.

Während bei einer fehlenden Zustimmung durch den Bediener lediglich gefahrbringende Maschinenoperationen gesperrt sind, wird die Anlage bei einer Sicherheitsabschaltung aufgrund des unzulässigen Signalzustandes (und mutmaßlichen Defektes) umfassend stillgesetzt und gegebenenfalls abgeschaltet. Eine Wiederinbetriebnahme der Maschine nach einer solchen Abschaltung kann einen erheblichen Aufwand erfordern und mit längeren Verzögerungszeiten beziehungsweise Stillstandszeiten, resultierend in höheren Kosten, verbunden sein.

WO 2010/009488 A2 offenbart ein Verfahren zum Betreiben eines mobilen Handbediengerätes, welches für die Abgabe oder Freischaltung von potentiell gefahrbringenden Steuerkommandos an eine mit diesem oder mit einem weiteren Handbediengerät wirkungsverbundene, steuerbare technische Einrichtung vorgesehen ist. Dabei ist eine Sicherheitsschalteinrichtung umfassend wenigstens eine Auswerteschaltung und zumindest einen mit der Auswerteschaltung signaltechnisch verbundenen Zustimmtaster vorgesehen, welcher einen ohne Betätigungskraft selbsttätig eingenommenen Ruhezustand und zwei durch unterschiedlich hohe Betätigungskräfte und/oder durch unterschiedliche Verstellwege festgelegte, aufeinanderfolgende Betätigungszustände in Art eines Zustimmungs-Betätigungszustandes und eines Panik-Betätigungszustandes aufweist.

EP 1 705 539 A1 offenbart eine Notaus-Vorrichtung, die in einem Robotersystem oder ähnlichem vorgesehen ist und eingerichtet ist, einen Fehler einer Schaltung, durch den ein Notaussignal an eine CPU bereitgestellt wird, sofort zu detektieren, ohne das Robotersystem anzuhalten.

### OFFENBARUNG DER ERFINDUNG

Es ist eine Aufgabe der vorliegenden Erfindung eine elektronische Auswerteeinheit für ein Sicherheitsschaltgerät bereitzustellen, die eine verbesserte Zuverlässigkeit schafft. Weitere Aufgaben sind die Bereitstellung eines verbesserten Sicherheitsschaltgerätes und die Bereitstellung eines entsprechenden Verfahrens.

Die gestellten Aufgaben werden durch eine elektronische Auswerteeinheit für ein Sicherheitsschaltgerät mit den Merkmalen des Anspruchs 1, durch ein Sicherheitsschaltgerät mit den Merkmalen des Anspruchs 13 und durch ein Verfahren zum Betreiben eines Sicherheitsschaltgeräts mit den Merkmalen des Anspruchs 16 gelöst.

Demgemäß wird eine elektronische Auswerteeinheit für ein Sicherheitsschaltgerät zum Freischalten einer vorbestimmten Maschinenoperation einer elektrisch gesteuerten Maschine vorgeschlagen. Die elektronische Auswerteeinheit weist einen ersten Erfassungsbaustein und einen zweiten Erfassungsbaustein auf. Der erste Erfassungsbaustein ist zum Erfassen einer ersten Betätigungsinformation, welche von einem von einem ersten Sensor zum Detektieren eines Betätigungszustands des Sicherheitsschaltgeräts bereitgestellten ersten Sensorsignals abgeleitet wird, und zum Erfassen einer zweiten Betätigungsinformation, welche von einem von einem zweiten Sensor zum Detektieren des Betätigungszustands des Sicherheitsschaltgeräts bereitgestellten zweiten Sensorsignals abgeleitet wird, eingerichtet. Der zweite Erfassungsbaustein ist zum Erfassen der ersten Betätigungsinformation und der zweiten Betätigungsinformation eingerichtet. Dabei sind der erste Erfassungsbaustein und der zweite Erfassungsbaustein derart eingerichtet, dass der erste Erfassungsbaustein und der zweite Erfassungsbaustein eine jeweilige Freischaltinformation zum Ansteuern einer jeweiligen Ausgangsschaltstufe zumindest innerhalb eines bestimmten maximalen zeitlichen Versatzes ausgeben, wenn der erste Erfassungsbaustein und der zweite Erfassungsbaustein eine bestimmte Änderung der ersten Betätigungsinformation und die bestimmte Änderung der zweiten Betätigungsinformation unmittelbar aufeinander folgend, das heißt ohne zwischenzeitliches Auftreten einer anderen als der bestimmten Änderung in den Betätigungsinformationen, detektieren.

Der erste Sensor und der erste Erfassungsbaustein sind Teil eines ersten Kanals oder Auswertekanals. Entsprechend sind der zweite Sensor und der zweite Erfassungsbaustein Teil eines zweiten Kanals oder Auswertekanals.

Die Freischaltinformationen der beiden Kanäle und damit die Auswertungssignale für die beiden Ausgangsschaltstufen werden praktisch zeitgleich, d.h. höchstens innerhalb eines definiert begrenzten zeitlichen Versatzes, ausgeben.

Die wenigstens zwei Erfassungsbausteine arbeiten derart, dass jeder der Erfassungsbausteine zeitgleich oder quasi zeitgleich ein identisches Ansteuersignal an eine dem jeweiligen Erfassungsbaustein zugeordnete, bevorzugt schaltungstechnisch nachfolgende Ausgangsschaltstufe ausgibt und damit einen elektronischen Ausgangskontakt erst dann schließt, wenn der Erfassungsbaustein bevorzugt innerhalb einer vorgegebenen Zeitspanne wenigstens zwei Signale oder Zustandsinformationen von dem Betätigungselement erhalten und deren Identität hinsichtlich der vorbestimmten Änderung (Signal- oder Zustandsübergangs) überprüft hat. Dagegen geben die Erfassungsbausteine kein Signal an die jeweils nachfolgende Ausgangsschaltstufe aus, wenn die von dem Sensor empfangenen Signale oder Zustandsinformationen diese Eigenschaft nicht aufweisen, bzw. in einer bevorzugten Ausführung zwar diese identischen Signale oder Zustandsinformationen an die Erfassungsbausteine übermittelt werden, aber nicht innerhalb der vorgegebenen Zeitspanne.

Die jeweilige Freischaltinformation kann auch als Ausgangssignal oder Freigabesignal des jeweiligen Erfassungsbausteins oder als Ansteuersignal für die jeweilige Ausgangsschaltstufe bezeichnet werden.

Durch den Zugriff aller Erfassungsbausteine auf die gleichen Betätigungsinformationen für alle Sensorkreise und die gleiche logische Verknüpfung dieser Betätigungsinformationen in allen Erfassungsbausteinen wird sichergestellt, dass ein zeitlicher Versatz beim Aktivieren des ersten und zweiten Ausgangssignals bzw. beim Öffnen eines ersten und zweiten Ausgangskontaktes nicht mehr abhängig ist von einem zeitlichen Versatz des Ansprechens der Sensoren bzw. von Schaltpunkten der Kontakte zur Erfassung deren Betätigungszustands. Der maximal mögliche zeitliche Versatz beim Aktivieren des ersten und zweiten Ausgangssignals hängt nur noch vom Unterschied der signaltechnischen Verzögerung bei der Auswertung der empfangenen Signale in den Erfassungsbausteinen ab. Dieser Unterschied ist rein technisch bedingt, etwa zufolge unterschiedlicher, insbesondere diversitärer Ausführungen des ersten und des zweiten Erfassungsbausteins und bewegt sich in definiert begrenzten Zeitspannen, die üblicherweise sehr viel kürzer sind, als jene, die als Schranken für die Erkennung von Fehlern im Sicherheitskreis festgelegt sind.

Ein wichtiger Aspekt für die Funktion der elektronischen Auswerteeinheit ist, dass von jedem Satz von Sensoren eine eindeutige, diskrete Betätigungsinformation gebildet wird, die im Beispiel des Zustimmschalters immer genau einen von drei möglichen Betätigungszuständen abbildet sowie gegebenenfalls zusätzliche Status- oder Fehlerzustände mit denen besondere Betriebszustände, etwa ein festgestellter Sensordefekt, abgebildet werden. Der jeweilige Betätigungszustand wird insbesondere in einer Diskriminierungseinheit eindeutig identifiziert und das Ergebnis den Erfassungsbausteinen mitgeteilt oder bereitgestellt. Die Erfassungsbausteine können dann basierend auf denselben Betätigungsinformationen und denselben logischen Regeln das jeweils zugeordnete Ausgangssignal für die Ausgangsschaltstufe bzw. den Ausgangskontakt aktivieren oder deaktivieren. Dabei können die diskreten Betätigungsinformationen direkt durch die Sensorsignale vorliegen, wenn diese durch Kontakte oder diskrete Schaltvorgänge gebildet werden. Wenn jedoch Lichtschranken oder zum Beispiel Druck- oder Kraftsensoren mit analogen Sensorsignalen zum Einsatz kommen, ist die optionale Signalaufbereitung und Diskriminierungseinheit erforderlich, um unter Verwendung festgelegter Schaltschwellen die diskrete Betätigungsinformation für die Erfassungsbausteine zu erhalten.

Bei einer Ausführungsform weist die elektronische Auswerteeinheit eine erste Diskriminierungseinheit und eine zweite Diskriminierungseinheit auf. Die erste Diskriminierungseinheit ist zum Ausgeben der ersten Betätigungsinformation in Abhängigkeit des ersten Sensorsignals des ersten Sensors eingerichtet. Die zweite Diskriminierungseinheit ist zum Ausgeben der zweiten Betätigungsinformation in Abhängigkeit des zweiten Sensorsignals des zweiten Sensors eingerichtet.

Bei einer weiteren Ausführungsform sind der erste Erfassungsbaustein und der zweite Erfassungsbaustein dazu eingerichtet, die Freischaltinformationen zum Ansteuern der Ausgangsschaltstufen basierend auf denselben logischen Regeln zumindest innerhalb des definiert begrenzten zeitlichen Versatzes auszugeben.

Um zu verhindern, dass die Zuverlässigkeit der elektronischen Auswerteeinheit durch zum Beispiel Design- oder Fabrikationsfehler der einzelnen Bausteine vermindert wird, können sich der erste und zweite Erfassungsbaustein vom Typ und/oder der Technologie unterscheiden.

Die technische Diversität der Erfassungsbausteine stellt sicher, dass eine technologisch bedingte Fehlfunktion in einem der Erfassungsbausteine nicht gleichzeitig in dem weiteren Erfassungsbaustein auftritt, zum Beispiel weil die eventuelle Fehlfunktion des Erfassungsbausteins bereits bei der Herstellung zum Beispiel durch einen Materialfehler oder ähnliches implementiert wurde.

Wenn die elektronische Auswerteeinheit Diskriminierungseinheiten umfasst, können die erste Diskriminierungseinheit und der erste Erfassungsbaustein und/oder jede weitere Diskriminierungseinheit und der ihr zugeordnete Erfassungsbaustein eine bauliche Einheit bilden. Bevorzugt kann dabei die Diskriminierungseinheit in den jeweiligen Erfassungsbaustein integriert sein. Die Erfassungsbausteine können dann die Betätigungsinformationen der jeweils zugeordneten Diskriminierungseinheit über eine Schnittstelle an den jeweils anderen Erfassungsbaustein übermitteln bzw. die Information für den jeweils anderen Erfassungsbaustein bereitstellen.

Demnach ist die Diskriminierungseinheit dazu eingerichtet, Informationen über den Betätigungszustand (oder auch Fehlerzustand) anhand eines einzelnen Sensors bereitzustellen und einer Erfassungseinheit, die aus den Betätigungszuständen und Betätigungsübergängen sämtlicher Diskriminierungseinheiten bzw. sämtlicher Sensorkreise jeweils unabhängig - ohne zwingende Synchronisation und ohne zwingenden Datenaustausch mit anderen Erfassungseinheiten - ein Freigabesignal generiert.

Eine, mehrere oder alle der Diskriminierungseinheit/en können des Weiteren eine Zulässigkeitsprüfung für das jeweils vom Sensor eingehende Signal durchführen. Die Zulässigkeitsprüfung kann direkt von den entsprechend ausgestalteten Diskriminierungseinheiten oder zum Beispiel mittels einer Steuer- und Überwachungseinheit, die mit der Diskriminierungseinheit verbunden und/oder in dem Erfassungsbaustein integriert ist, durchgeführt werden. Wird dabei das Vorliegen eines unzulässigen oder fehlerhaften Sensorsignals, zum Beispiel aufgrund einer defekten Mechanik, eines defekten Schalters oder defekter Sensoren oder eines vorübergehenden externen Störeinflusses, detektiert, führt dies dazu, dass die Bedienung der Maschine oder Anlage nicht freigeschaltet oder eine Störabschaltung der Maschine oder Anlage erzwungen wird. Eine unentdeckte Fehlerhäufung mit einem daraus resultierenden Verlust der Sicherheit wird dadurch zuverlässiger verhindert.

Eine, mehrere oder alle Diskriminierungseinheiten können - bevorzugt periodisch - einen Selbsttest der elektronischen Auswerteeinheit durch eine Dynamisierung der Sensorsignale und der den Sensorsignalen zugeordneten Signaleingänge an den Diskriminierungseinheiten durchführen.

Bei der Dynamisierung kann es sich zum Beispiel um ein periodisches kurzes Abschalten der empfangenen Sensorsignale oder der Versorgungsspannung der Sensoren handeln, was zu einem entsprechend vorübergehend veränderten Signal am Eingang der Diskriminierungseinheiten führt. Diese zwangsläufig zu erwartende Änderung kann dann überprüft werden. Sollte es dabei zur Erfassung eines nicht plausiblen Signalmusters kommen, führt dieser dann irreguläre Zustand dazu, dass ein Fehler entdeckt und die Maschine oder Anlage in einem sicheren Zustand gehalten oder überführt wird. Durch diesen Selbsttest können zum Beispiel defekte Sensoren und defekte Erfassungseingänge erkannt werden. Dadurch wird die Sicherheit weiter erhöht, eine unentdeckte Fehlerhäufung mit einem daraus resultierenden Verlust der Sicherheit noch zuverlässiger verhindert.

Wenigstens einer der Microcontroller kann eine Datenschnittstelle, insbesondere eine serielle Datenschnittstelle aufweisen, über die Informationen abgefragt und/oder ausgegeben werden können.

Bei den Informationen kann es sich zum Beispiel um die aktuellen Betätigungszustände und/oder die Aktivierungszustände der jeweiligen Ausgangssignale bzw. der jeweiligen Ausgangskontakte und/oder zusätzlich gebildete Status- oder Fehlermeldungen handeln.

In den Sicherheitskreis wird nur die aktive Zustimmung beziehungsweise deren Fehlen als sicherheitsrelevante Information eingekoppelt. Über die Datenschnittstelle stehen dagegen erweiterte Informationen zu Verfügung, die beispielsweise von einem Prozessor des Handbediengerätes oder der funktionalen Steuerung der Anlage erfasst und für erweiterte Funktionen und Informationen für den Benutzer verwendet werden können. Beispielsweise kann dem Benutzer optisch oder akustisch signalisiert werden, wenn eine Zustimmung vorliegt und somit bestimmte Befehle freigeschaltet sind und/oder ein Fehlerhinweis, wenn zum Beispiel über weitere Eingabemittel eine Verfahrbewegung angestoßen werden soll, ohne dass die gleichzeitig dafür erforderliche Zustimmung vorliegt. Auch ein festgestellter Defekt oder ein irregulärer Zustand kann über die Schnittstelle der Bedienperson bereitgestellt werden, wodurch Fehlersuchzeiten und damit Maschinen- oder Anlagen-Stillstandzeiten reduziert werden können.

Bei einer weiteren Ausführungsform weist das Sicherheitsschaltgerät zumindest ein von einer Bedienperson manuell beeinflussbares Betätigungselement auf, welches dazu eingerichtet ist, ohne Einwirkung einer Betätigungskraft auf das Betätigungselement selbsttätig einen ersten Betätigungszustand einzunehmen, ausgehend vom ersten Betätigungszustand durch manuelle Verstellung des Betätigungselementes und/oder durch Erhöhung der Betätigungskraft auf das Betätigungselement einen zweiten Betätigungszustand einzunehmen, und ausgehend vom zweiten Betätigungszustand durch fortgesetzte manuelle Verstellung des Betätigungselementes und/oder Erhöhung der Betätigungskraft auf das Betätigungselement einen dritten Betätigungszustand einzunehmen.

Bei einer weiteren Ausführungsform weist der erste Sensor mechanische Kontakte und vorzugsweise nachgeschaltete Signalaufbereitungskomponenten auf, wobei die erste Diskriminierungseinheit zur Erfassung und Unterscheidung des ersten, zweiten und dritten Betätigungszustandes und Bildung einer korrespondierenden ersten Betätigungsinformation geeignet ist. Ferner weist auch der zweite Sensor mechanische Kontakte und vorzugsweise nachgeschaltete Signalaufbereitungskomponenten auf, wobei die zweite Diskriminierungseinheit zur Erfassung und Unterscheidung des ersten, zweiten und dritten Betätigungszustandes und Bildung einer korrespondierenden zweiten Betätigungsinformation geeignet ist.

Die jeweilige Einheit oder der jeweilige Baustein, zum Beispiel Auswerteeinheit, Erfassungsbaustein und Diskriminierungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als eigenständiger Prozess, als Teil eines Programmcodes und/oder als ausführbares Objekt ausgebildet sein. Die genannten jeweiligen Einheiten können auch in mehreren eigenständigen Prozessorkernen innerhalb eines gemeinsamen integrierten Schaltkreises implementiert sein beziehungsweise in diesen zur Ausführung gelangen.

Des Weiteren wird ein Sicherheitsschaltgerät zum Freischalten einer vorbestimmten Maschinenoperation einer elektrisch gesteuerten Maschine vorgeschlagen, welches wenigstens ein von einer Bedienperson manuell zu betätigendes Betätigungselement, einen ersten Sensor, einen zweiten Sensor und eine wie oben beschriebene elektronische Auswerteeinheit aufweist.

Dabei ist das Betätigungselement dazu eingerichtet, ohne Einwirkung einer Betätigungskraft auf das Betätigungselement selbsttätig einen ersten Betätigungszustand einzunehmen, ausgehend vom ersten Betätigungszustand durch manuelle Verstellung des Betätigungselementes und/oder durch Erhöhung der Betätigungskraft auf das Betätigungselement einen zweiten Betätigungszustand einzunehmen, und ausgehend vom zweiten Betätigungszustand durch fortgesetzte manuelle Verstellung des Betätigungselementes und/oder Erhöhung der Betätigungskraft auf das Betätigungselement einen dritten Betätigungszustand einzunehmen. Der erste Sensor ist zum Detektieren des Betätigungszustandes des Sicherheitsschaltgerätes eingerichtet, welcher in Abhängigkeit des detektierten Betätigungszustandes ein erstes Sensorsignal dem ersten Erfassungsbaustein bereitstellt. Der zweite Sensor ist zum Detektieren des Betätigungszustandes des Sicherheitsschaltgerätes eingerichtet, welcher ein zweites Sensorsignal in Abhängigkeit des detektierten Betätigungszustandes dem zweiten Erfassungsbaustein bereitstellt.

Insbesondere sind der erste Betätigungszustand durch eine erste Position des Betätigungselements, der zweite Betätigungszustand durch eine zweite Position des Betätigungselements und der dritte Betätigungszustand durch eine dritte Position des Betätigungselements bestimmt.

Aus der ersten Position kann das Betätigungselement von der Bedienperson in eine zweite Position bewegt, zum Beispiel gedrückt oder geschoben werden. Ist das Betätigungselement in der zweiten Position, die nicht identisch mit der ersten Position ist, gibt das Sicherheitsschaltgerät das Freigabesignal für einen sicheren Betrieb , so dass die Anlage angefahren, Antriebe der Anlage eingekoppelt und/oder Bremsen gelöst werden können. Solange nun das Betätigungselement in der zweiten Position verbleibt, signalisiert der Bediener damit sichere Betriebsbedingungen.

Sobald das Betätigungselement aus der zweiten Position in die erste oder Ausgangsposition, auch Ruheposition genannt, zum Beispiel durch Federkraft zurückbewegt wird, wird einer Sicherheitssteuerung der Anlage signalisiert, dass der Betrieb der Anlage nicht länger freigegeben ist und die Anlage wird unverzüglich gestoppt bzw. werden Sicherheitseinrichtungen wie etwa mechanische Bremsen oder Antriebssperren aktiviert.

Der Benutzer kann das Betätigungselement aus der zweiten Position durch zum Beispiel eine Erhöhung der auf das Betätigungselement wirkenden Druckkraft in eine dritte Position bewegen, was - wie die Rückkehr - in die erste Position zu einem unverzüglichen Stopp der Anlage führt. Diese dritte Position, die unterschiedlich von der ersten Position und unterschiedlich von der zweiten Position ist, wird auch als Panikposition bezeichnet, da ein plötzliches Erschrecken des Bedieners im Gefahrenfall häufig der Auslöser für die Bewegung des Betätigungselements aus der zweiten in die dritte Position ist. Um nach einem Stillsetzen, ausgelöst durch die Panikposition des Betätigungselements, die Anlage erneut starten zu können, genügt es nicht, das Betätigungselement in die zweite Position zurückzubewegen. Vielmehr ist es erforderlich, dass das Bedienelement zurück in die erste Position oder Ausgangsposition bewegt wird, aus der es durch den Bediener zur erneuten Signalisierung eines sicheren Betriebszustands wieder in die zweite Position bewegt werden kann. Das Sicherheitsschaltgerät kann ein zweites von der Bedienperson beeinflussbares Betätigungselement aufweisen. Dieses zweite Betätigungselement ist bevorzugt so zum ersten Betätigungselement angeordnet, dass der Bediener im Wesentlichen das erste und das zweite Betätigungselement gleichzeitig und gleichwirkend manipuliert. Dazu kann das erste Betätigungselement mit dem zweiten Betätigungselement zum Beispiel überlagert, mit diesem verschränkt oder bewegungsgekoppelt sein. Dabei kann zum Beispiel der erste Satz von Sensoren dem ersten Betätigungselement zugeordnet sein und der zweite Satz der Sensoren dem zweiten Betätigungselement. Aber es können auch jedem der Betätigungselemente je zwei Sensorensätze zugewiesen sein. Die Anzahl der Betätigungselemente, die durch den Bediener bevorzugt gleichzeitig und gleichwirkend manipulierbar sind, kann größer als zwei sein, ebenso die Anzahl der auf ein einzelnes Betätigungselement wirkenden Sensorensätze. Schließlich kann verschiedenen Betätigungselementen eine unterschiedliche Anzahl von Sensorensätzen zugeordnet sein.

Bei dieser Ausführungsform weist das Sicherheitsschaltgerät eine elektrische oder elektronische und eine mechanische Zweikreisigkeit auf, wodurch die Sicherheit und Zuverlässigkeit weiter verbessert wird. Herauszustellen ist, dass es insbesondere bei der mechanischen Zweikreisigkeit vergleichsweise leicht zu einer gewissen Asynchronität, insbesondere einem zeitlichen Versatz bei der Überführung des oder der Sensoren der beiden Kreise von einem Betätigungszustand in den nächsten Betätigungszustand kommen könnte. Damit dieser zeitliche Versatz nicht dazu führt, dass die Sicherheitssteuerung oder das Überwachungsgerät anstatt der eigentlich gewollten Freigabe der Anlage deren fehlerbedingte Stillsetzung veranlasst, ist es insbesondere vorteilhaft, dass alle Erfassungsbausteine die Betätigungsinformationen zufolge aller Sensorkreise jeweils eigenständig und auf gleiche Weise logisch verknüpfen und somit zumindest annähernd gleichzeitig ein entsprechendes Freigabesignal in den Sicherheitskreis einkoppeln.

Ein Handbediengerät, z.B. Programmiergerät für Roboter, kann auch mehr als ein Sicherheitsschaltgerät zum Beispiel in Form eines Zustimmschalters oder einer anderen Zustimmmechanik aufweisen, welche alternativ verwendbar sind, um beispielsweise der Bedienperson einen Handwechsel während der Zustimmphase bzw. der während der Ausführung einer Maschinenoperation zu ermöglichen. Dabei kann es zu der Situation kommen, dass zumindest kurzfristig zwei der Betätigungselemente gleichzeitig aktiviert, zum Beispiel in einer Zustimmposition gehalten werden sollen, um die Zustimmung während des Handwechsels beizubehalten. Ein gleichzeitiges Aktiv sein zweier oder mehrerer Zustimmtaster kann aber auch unzulässiger Weise durch eine besondere Handhaltung des Handbediengeräts zustande kommen, das heißt einmal durch eine bewusste Zustimmung an einem ersten Zustimmtaster durch die Finger der Bedienperson und eine unbeabsichtigte weitere Zustimmung an einem zweiten Zustimmtaster, auf dem beispielsweise nur ein Handballen oder Unterarm aufliegt. Lässt nun die Bedienperson im Gefahrenfall den einen Zustimmtaster los, um die Anlage stillzusetzen, könnte das durch die weiterbestehende unbewusste Zustimmung am zweiten Zustimmtaster verhindert werden und zu einer Gefährdung führen. Diese Problematik wird dadurch verschärft, dass aus Ergonomiegründen mehrere solcher Zustimmtaster an verschiedenen, günstig erreichbaren Griffbereichen angebracht sind und die jeweils erforderliche Betätigungskraft für den Übergang vom unbetätigten in den ersten betätigten Zustand relativ gering ist, um eine ermüdungsfreie Handhabung zu gewährleisten. Aus Sicherheitsgründen ist es daher sinnvoll, die Zeit, in der zwei Betätigungselemente gleichzeitig einen sicheren Zustand signalisieren, zu begrenzen. Die zulässige Zeitspanne kann zum Beispiel 1 Sekunde bis 5 Sekunden betragen, bevorzugt beträgt sie etwa 2 Sekunden. Bleiben gleichzeitig zwei oder mehr Betätigungselemente länger als die vorgegebene Zeitspanne in der Zustimmposition, wird wenigstens eine der in den Sicherheitskreis eingekoppelten Ausgangsschaltstufen deaktiviert, wodurch die Anlage unverzüglich still gesetzt wird. Um eine erneute Zustimmung zu signalisieren, müssen zuvor alle Betätigungselemente oder Zustimmmechaniken gleichzeitig den unbetätigten Ruhezustand einnehmen und anschließend zumindest einer der Zustimmtaster erneut in den Zustimm-Betätigungszustand versetzt werden.

Auch bei andauernder Betätigung eines Zustimmtasters über einen vorgegebenen längeren Zeitraum von beispielsweise 15 Minuten kann eine automatische Abschaltung von zumindest einer Ausgangsstufe vorgesehen sein, da auch dies ein Indiz für eine Manipulation bzw. eine unzulässige mechanische Fixierung des Zustimmtasters sein kann. Darüber hinaus erfolgt dadurch eine regelmäßige Funktionskontrolle des Zustimmtasters dahin gehend, dass dieser beim Loslassen auch tatsächlich zuverlässig und selbsttätig in die Ausgangsposition zurückkehrt, wodurch die Sicherheit und Zuverlässigkeit erhöht wird.

Falls mehrere Zustimmtaster zur alternativen Verwendung angeordnet sind bezieht sich diese Überwachung der dauerhaften Fixierung in vorteilhafter Weise jeweils auf den Betätigungszustand eines jeden einzelnen Zustimmtasters und nicht etwa auf den Zustand des gemeinsam aus allen Zustimmtastern abgeleiteten Freigabesignals für den Sicherheitskreis. Es kann also insbesondere eine dauerhafte Zustimmung über das Zeitlimit von beispielsweise 15 Minuten hinaus signalisiert werden, wenn die Bedienperson innerhalb dieses Zeitintervalls in zuvor beschriebener Weise von einem ersten Zustimmtaster auf einen zweiten wechselt, ohne dabei die Zustimmung zu unterbrechen.

Außerdem wird ein Verfahren zum Betreiben eines Sicherheitsschaltgerät zum Freischalten einer vorbestimmten Maschinenoperation einer elektrisch gesteuerten Maschine vorgeschlagen. In einem ersten Schritt werden eine erste Betätigungsinformation, welche von einem von einem ersten Sensor zum Detektieren eines Betätigungszustands des Sicherheitsschaltgeräts bereitgestellten ersten Sensorsignals abgeleitet wird, und eine zweite Betätigungsinformation, welche von einem von einem zweiten Sensor zum Detektieren des Betätigungszustands des Sicherheitsschaltgeräts bereitgestellten zweiten Sensorsignals abgeleitet wird, durch einen ersten Erfassungsbaustein erfasst. In einem zweiten Schritt werden die erste Betätigungsinformation und die zweite Betätigungsinformation durch einen zweiten Erfassungsbaustein erfasst. In einem dritten Schritt wird eine jeweilige Freischaltinformation durch den ersten Erfassungsbaustein und durch den zweiten Erfassungsbaustein zum Ansteuern einer jeweiligen Ausgangsschaltstufe zumindest innerhalb eines definiert begrenzten zeitlichen Versatzes ausgegeben, wenn der erste Erfassungsbaustein und der zweite Erfassungsbaustein eine bestimmte Änderung der ersten Betätigungsinformation und die bestimmte Änderung der zweiten Betätigungsinformation unmittelbar aufeinander folgend detektieren.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Außerdem wird ein Datenträger mit einem gespeicherten Computerprogramm mit Befehlen vorgeschlagen, welche die Durchführung des wie oben erläuterten Verfahrens auf einer programmgesteuerten Einrichtung veranlasst.

Die Erfindung wird nachfolgend anhand der in den schematischen Figuren angegebenen Ausführungsbeispiele näher erläutert. Es zeigen:
- Fig. 1: zwei Bedienpersonen beim Teachen eines Roboters;
- Fig. 2: einen schematischer Aufbau eines Sicherheitsschaltgeräts;
- Fig. 3: eine schematische Verschaltung mehrerer Zustimmschalter;
- Fig. 4: eine Darstellung von idealen Ausgangszuständen für die Einkopplung in den Sicherheitskreis;
- Fig. 5: ein herkömmliches zeitlich versetztes Ansprechen der Kontakte;
- Fig. 6: einen Ausgleich des zeitlichen Versatzes gemäß der Erfindung;
- Fig. 7: eine Sperre der Ausgangsstufen bei Überschreitung eines festgelegten maximal zulässigen zeitlichen Versatzes der Sensorsignale; und
- Fig. 8: ein schematisches Ablaufdiagramm eines Ausführungsbeispiels eines Verfahrens zum Betreiben eines Sicherheitsschaltgeräts.

In allen Figuren sind gleiche bzw. funktionsgleiche Mittel und Einrichtungen - sofern nichts anderes angegeben - mit denselben Bezugszeichen versehen.

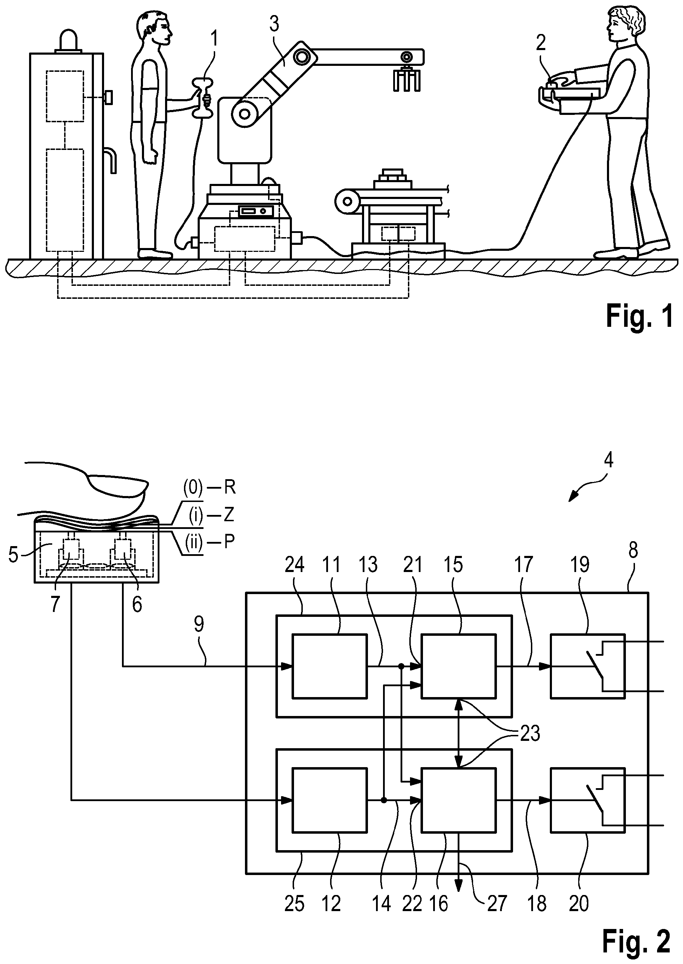

Die Fig. 1 zeigt zwei Bedienpersonen innerhalb des Arbeitsbereiches eines Industrieroboters 3 bei einem Teachvorgang, d.h. bei einem Programmiervorgang für den Bewegungsablauf eines Roboters. Bei einem solchen Teachvorgang hält sich die Bedienperson im unmittelbaren Nahbereich des Roboters 3, zum Beispiel innerhalb einer üblicherweise vorhandenen (nicht dargestellten) Schutzumzäunung auf und der Roboter befindet sich in einer sicher überwachten Sonderbetriebsart mit sicher überwachter und reduzierter Geschwindigkeit und gegebenenfalls reduzierter Antriebskraft.

Im Normalbetrieb wird der Roboter 3 dagegen bei voller Arbeitsgeschwindigkeit und Antriebskraft gefahren und die Sicherheit wird durch eine geschlossene Schutzumzäunung oder durch entsprechende Sensoren überwacht und sichergestellt.

Eine der dargestellten Personen hält eine Zustimmvorrichtung 1, die andere ein Handbediengerät mit Bedien- und Anzeigeelementen sowie einem Zustimmtaster 2. Nur wenn beide Personen gleichzeitig die Zustimmvorrichtung 1 bzw. den Zustimmtaster 2 drücken, kann eine Verfahrbewegung des Roboters 3 freigeschaltet werden. Im Gefahrenfall kann jede der Personen durch Loslassen oder Überführen der Zustimmvorrichtung 1 bzw. des Zustimmtasters 2 in den Panik-Betätigungszustand die Stillsetzung des Roboters 3 zuverlässig veranlassen. Die Zustimmvorrichtung 1 und der Zustimmtaster 2 des Handbediengerätes sind mit dem Sicherheitskreis bzw. mit der Sicherheitssteuerung des Roboters 3 verbunden.

Die Fig. 2 zeigt ein erfindungsgemäßes Sicherheitsschaltgerät 4 mit der Schaltermechanik 5 und den Sensoren 6, 7, die jeweils unabhängig den Betätigungszustand der Schaltermechanik 5 erfassen, und mit der elektronischen Auswerteschaltung 8.

Die Sensoren 6, 7 können sowohl herkömmliche mechanische Kontakte als auch kontaktlos arbeitende Sensoren, etwa optische Sensoren oder Drucksensoren sein, wobei beide Kreise oder Kanäle auch mit unterschiedlichen Arten von Sensoren 6, 7 ausgeführt sein können, um eine erhöhte Sicherheit durch technische Diversität zu erzielen.

Schematisch zeigt die Fig. 2 die dreistufige Betätigung eines Zustimmtasters 2. Der Zustimmtaster 2 kann aus dem Ruhezustand R über den Zustimmzustand Z in den Panikzustand P bewegt werden. Das heißt, der Zustimmtaster 2 befindet sich bei der Übernahme durch die Bedienperson im Ruhezustand R, indem er keine Signale oder zumindest keine Freigabesignale zum Beispiel an den Roboter 3 der Fig. 1 ausgibt. Wenn der Bediener den Zustimmtaster 2 in den Zustimmzustand Z bewegt, erhält der Roboter 3 bzw. dessen Steuerung und Antriebe die Freigabe für eine Verfahrbewegung. Die Verfahrbewegung bzw. die Art, Richtung und Geschwindigkeit wird durch gleichzeitig mit dem Zustimmtaster zu betätigende weitere Bedienelemente, beispielsweise Verfahrtasten oder einem Joystick, ausgelöst bzw. festgelegt. Kommt es jedoch zu Situationen, die für die Bedienperson gefährlich werden können oder den Roboter 3 oder Geräte in der Umgebung beschädigen können, kann der Bediener die Aktivitäten, insbesondere die zustimmungsabhängigen Aktivitäten des Roboters 3 stoppen, indem er den Betätigungsschalter oder Zustimmtaster 2 loslässt, wodurch dieser im Regelfall automatisch in seinen Ruhezustand R zurückgeführt wird. Aus der Ruheposition R kann der Betätigungsschalter 2 wieder in die Zustimmposition bewegt werden.

Im Falle einer Gefahr kann der Bediener bewusst oder unterbewusst den Zustimmtaster auch in die Panikposition P bewegen, was ebenfalls zu einem sofortigen Abbruch sämtlicher Aktivitäten des Roboters 3 führt. Auch jetzt kehrt der Zustimmtaster 2 zuerst in den Ruhezustand R zurück, bevor das Bedienpersonal eine erneute Zustimmung signalisieren kann und der Roboter wieder aktiviert wird.

Die Sensorsignale 9, 10 aus den Sensoren 6, 7 der Schaltermechanik 5 bilden jeweils einen funktional unabhängigen Kreis beziehungsweise Kanal zur Erfassung des aktuellen Betätigungszustandes der Schaltermechanik 5. Die Sensorsignale 9, 10 werden jeweils einer Diskriminierungseinheit 11, 12 zugeführt, die daraus jeweils, etwa durch logische Verknüpfung bei digitalen Schaltsignalen oder durch Vergleich mit festgelegten Schaltschwellen bei analogen Sensorsignalen, eine Betätigungsinformation 13, 14 generiert, die im Wesentlichen die drei möglichen Betätigungszustände Ruhezustand R, Zustimmzustand Z und Panikzustand P abbildet, sowie gegebenenfalls diverse Fehlerzustände, falls diese von der Diskriminierungseinheit erkannt werden.

Jede der unabhängig generierten Betätigungsinformationen 13, 14 wird jeweils beiden Erfassungsbausteinen 15 und 16 zugeführt und dort jeweils anhand der Betätigungszustände R, Z, P, und deren Abfolge zu einem Schaltzustand für das Freigabesignal oder Zustimmsignal 17, 18 bzw. der Ausgangsschaltstufen 19, 20 verknüpft. Beide Erfassungsbausteine 15, 16 wenden zeitgleich dieselben Verknüpfungsregeln auf den jeweils selben Satz von Betätigungsinformationen 13, 14 an, so dass im fehlerfreien Fall die Schaltzustände für das jeweilige Zustimmsignal im Wesentlichen zeitgleich und übereinstimmend wechseln.

Der zeitliche Versatz der Zustimmsignale 17, 18 ist nur mehr abhängig von den eventuell unterschiedlichen Durchlaufzeiten oder Zykluszeiten der Erfassungsbausteine 15, 16 und/oder der Verzögerung bei der Übertragung der Betätigungsinformationen 13, 14 über die Schnittstellen 21, 22. Der zeitliche Versatz ist somit rein technisch bedingt und damit klar eingrenzbar und liegt typischerweise eine oder mehrere Größenordnungen unter der Zeitspanne für die Feststellung eines etwaigen Fehlerzustandes im Sicherheitskreis durch ein Überwachungsgerät oder eine Sicherheitssteuerung. Der zeitliche Versatz in den Sensorsignalen 9, 10 hat hingegen keine Auswirkung auf den Versatz in den Ausgangs- oder Zustimmsignalen 17, 18. Der Versatz in den Ausgangs- oder Zustimmsignalen ist stets kleiner als die maximal auftretende Durchlaufzeit von jedem der Erfassungsbausteine samt Ausgangsschaltstufe. Die Einhaltung des maximal zulässigen zeitlichen Versatzes in den Ausgangs- oder Zustimmsignalen wird somit sichergestellt, in dem die Durchlaufzeiten kürzer als dieser maximale zeitliche Versatz gehalten werden, was in der Regel technisch ohne besondere Schwierigkeiten realisierbar ist.

Im vorliegenden Beispiel ist jeweils eine Diskriminierungseinheit 11, 12 und ein Erfassungsbaustein 15, 16 gemeinsam in einem Mikrocontroller 24, 25 implementiert. Bei Verwendung unterschiedlicher Mikrocontroller 24, 25 kann eine gewisse Diversität erzielt werden, sodass sich etwaige äußere Störeinflüsse oder interne Designfehler oder Chargenfehler niemals in beiden Kreisen bzw. Kanälen gleichzeitig und in gleicher Weise auswirken können. Ferner weist der Erfassungsbaustein 16 des Microcontrollers 25 eine Datenschnittstelle 27, insbesondere eine serielle Datenschnittstelle auf, über die Informationen abgefragt und/oder ausgegeben werden können. Über die Schnittstellen 23 können die Erfassungsbausteine 15, 16 untereinander kommunizieren.

Insbesondere können die Diskriminierungseinheiten 11, 12 und Erfassungsbausteine 15, 16 auch als eigenständige bzw. getrennte Schaltungsteile ausgeführt sein.

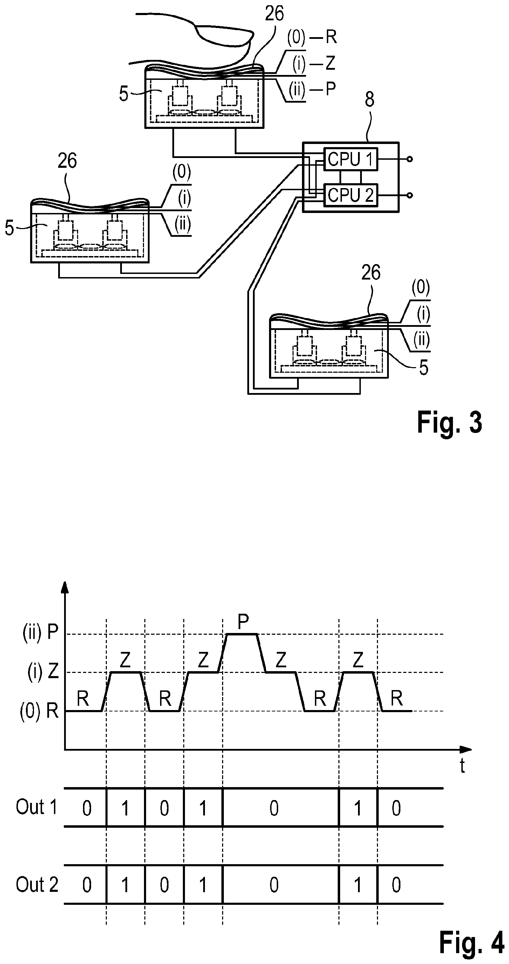

Die Fig. 3 zeigt beispielhaft und schematisch die Verschaltung mehrerer Zustimmtaster 5 innerhalb eines Handbediengerätes mit einer gemeinsamen elektronischen Auswerteschaltung 8, wie sie etwa in einem Handbediengerät realisierbar ist. In einem solchen Handbediengerät sind aus Gründen der Ergonomie häufig mehrere Zustimmtaster 5 integriert, welche von der Bedienperson je nach Handhaltung alternativ verwendbar sind. Die Zustimmtaster 5 werden dabei ergonomisch günstig in einen als Griffbereich ausgebildeten Gehäuseabschnitt des Handbediengeräts baulich integriert. Durch mehrere Griffbereiche 26 und/oder mehrere Zustimmtaster 5 ist sowohl bei der Handhabung des Handbediengeräts durch Rechtshänder wie auch durch Linkshänder und auch bei verschiedenen Bediensituationen mit unterschiedlicher Handhaltung stets ein Zustimmtaster 5 bequem durch die Finger jener Hand bedienbar, welche das Handbediengerät hält, während mit der anderen Hand die spezifischen Bedienvorgänge und Maschinenfunktionen, etwa durch Betätigung von Verfahrtasten oder eines Joysticks, durchgeführt bzw. ausgewählt werden. Die Betätigungszustände der mehreren Zustimmtaster 5 eines Handbediengerätes werden durch geeignete und in sicherer Technik ausgestaltete Auswerteschaltungen 8 zu einem gemeinsamen Freigabesignal verknüpft und das Ergebnis der Verknüpfung mehrkreisig in den Sicherheitskreis eingekoppelt.

Aus Sicht des Sicherheitskreises verhält sich die Mehrzahl von Zustimmtastern 5 wie ein einzelner Zustimmtaster, der entweder Zustimmung oder Nicht-Zustimmung signalisiert.

In der Fig. 4 sind zur Illustration die idealen (synchronen) Ausgangsschaltzustände (Out 1, Out 2) für die Einkopplung in den Sicherheitskreis in Abhängigkeit von den Übergängen der Betätigungsstufen eines dreistufigen Zustimmtasters für mehrere Schaltspiele dargestellt. Im Koordinatensystem ist der Betätigungsweg über die Zeit dargestellt. Herauszustellen ist, dass bei Eintritt des Panik-Schaltzustandes P die Zustimmung gelöscht wird, bis der Zustimmtaster in den Ruhe-Betätigungszustand R und anschließend wieder in den Zustimm-Betätigungszustand Z versetzt wird. Ferner wird nach einem Panik-Betätigungszustand und der anschließenden Rückkehr in den Ruhe-Betätigungszustand vorzugsweise über eine gewisse definierte Zeitspanne hinaus eine erneute Zustimmung elektronisch unterdrückt bzw. wird der Zustimmtaster nach einer Panik-Betätigung P anschließend für eine gewisse Zeit im unbetätigten Zustand gehalten, bis eine erneute Zustimmung möglich ist bzw. an den Ausgängen signalisiert wird. Diese zeitliche Verzögerung verhindert zum Beispiel eine ungewollte erneute Aktivierung bei einem Erschrecken im Gefahrenfall.

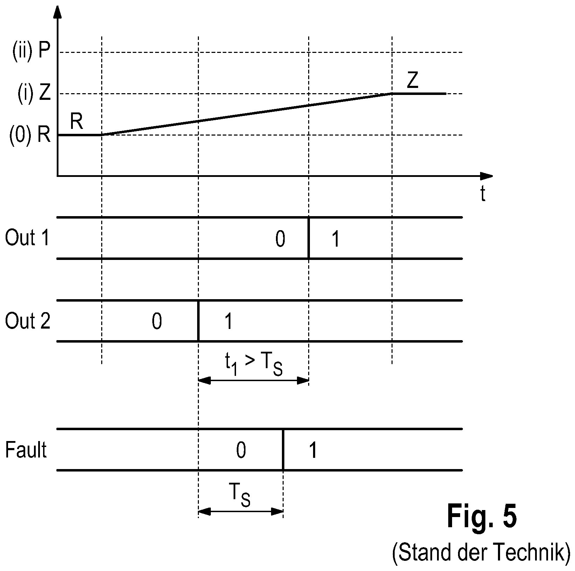

In der Fig. 5 sind die Schaltzustände eines herkömmlichen Sicherheitsschaltgerätes über einer Zeitachse dargestellt. Beispielhaft wird das zeitlich versetzte Ansprechen der Kontakte der beiden Kreise eines herkömmlichen Zustimmtasters bei einem provoziert langsamen Übergang vom Ruhezustand R in den Zustimmzustand Z gezeigt, welche sich bei den Ausführungen aus dem Stand der Technik unmittelbar in den Ausgangsschaltzuständen Out 1 und Out 2 zur Einkopplung in den Sicherheitskreis widerspiegeln. Der dabei auftretende zeitliche Versatz t₁ der Kontakte ist im dargestellten Fall länger als die Toleranzzeitspanne der Sicherheitssteuerung T_{S} für die Feststellung eines inkonsistenten bzw. unzulässigen Signalzustandes im Sicherheitskreis und führt daher zu einem Maschinenfehler (Fault) mit nachfolgender sicherheitsbedingter Stillsetzung der Anlage.

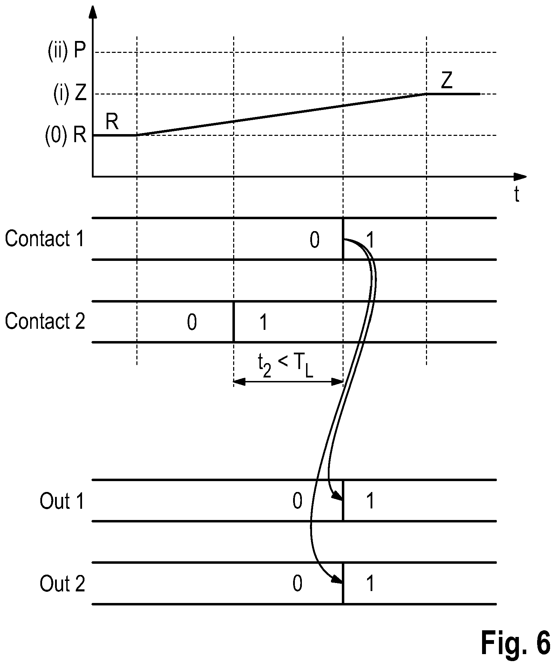

Die Fig. 6 zeigt nun die Wirkungsweise der vorliegenden Auswerteeinheit 8, bei welcher zwei unabhängig arbeitende Prozessoren oder Erfassungsbausteine der elektronischen Auswerteeinheit jeweils beide Kontaktzustände eines zweikreisigen Zustimmtasters erfassen und erst dann für jeweils einen Kanal den Ausgangskontakt (Out 1 bzw. Out 2) schließen, wenn beide Schalt- bzw. Sensor-Kreise des Zustimmtasters Zustimmung signalisieren. Jeweils ein Prozessor steuert einen der Ausgangskontakte Out 1 bzw. Out 2.

Damit werden beide Ausgangskontakte praktisch gleichzeitig mit der Schaltflanke des später geschlossenen der beiden Schaltkontakte des Zustimmtasters aktiviert. Der maximal auftretende zeitliche Versatz ist damit nur noch durch die maximale Zykluszeit der Prozessoren bzw. Erfassungsbausteine bestimmt, innerhalb der die Ausgangssignale bei veränderten Eingangssignalen nachgeführt werden. Die beiden Erfassungsbausteine arbeiten völlig eigenständig, so dass eine vollständige Zweikreisigkeit und Einfehlersicherheit sicher gestellt ist.

Beim Verlassen des Zustimm-Betätigungszustandes oder Zustimmzustands Z, das heißt beim Übergang in den Panikzustand P oder der Rückkehr in den Ruhezustand R werden hingegen bereits beim ersten Wechsel von einem der Kontakte bzw. Sensoren beide Ausgangskontakte Out 1 und Out 2 auf 0 gesetzt, d.h. geöffnet bzw. nicht leitend und nicht etwa erst beim Öffnen des letzten aller Kontakte. Eine erneute Zustimmung wird erst dann wieder an den Ausgängen signalisiert, wenn zuvor der Zustimmtaster in den unbetätigten Zustand oder Ruhezustand R und anschließend erneut in den Zustimmzustand Z versetzt wird.

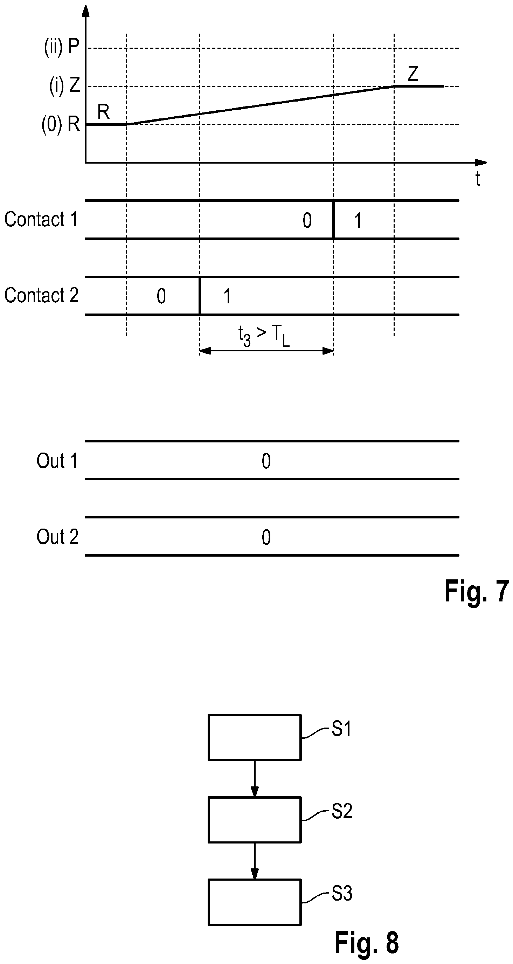

Gemäß einer vorteilhaften Weiterbildung, deren Verhalten in der Fig. 7 dargestellt ist, wird die Zeit ab dem Ansprechen des ersten Zustimmkontaktes von den Prozessoren oder Erfassungsbausteinen 15, 16 der Auswerteschaltung 8 gemessen und ab dem Überschreiten einer vorgegebenen Zeitspanne T_{L} ein späterer Übergang der weiteren Zustimmkontakte ignoriert, d.h. die Ausgänge Out 1 und Out 2 signalisieren weiterhin 0 bzw. bleiben abgeschaltet, falls der zeitliche Versatz der Zustimmkontakte ein vorgegebenes Ausmaß T_{L} überschreitet. Erst nach dem der Zustimmtaster in seinen Ruhezustand R gebracht wurde, das heißt beide Zustimmkontakte oder Sensorkreise den Ruhezustand R signalisieren, ist eine Aktivierung der Ausgangskontakte erneut möglich.

Dadurch wird sichergestellt, dass etwa bei einem Fehler in der Erfassung der Betätigungszustände, der beispielsweise eine dauernden fehlerhaften Erfassung des Zustimm-Zustandes für einen der Sensorkreise bewirkt, an den Ausgangskontakten keine Zustimmung mehr signalisiert werden kann und es durch den erkennbaren Funktionsausfall zu keiner unbemerkten Fehleranhäufung und einem daraus entstehenden Sicherheitsverlust kommen kann. Anders als bei einer Synchronitätsüberwachung für den gesamten Sicherheitskreis durch eine Sicherheitssteuerung, führt das zeitversetzte Ansprechen der Sensorkreise beziehungsweise der Kontakte nur zum Ausbleiben der Zustimmung für alle Kanäle des Sicherheitskreises, nicht aber zu einer sicherheitsbedingten völligen Stillsetzung der Anlage durch die Sicherheitssteuerung. Durch bloße erneute Betätigung des Zustimmtasters unter Einhaltung der Zeitbedingung T_{L} wird der Maschinenbetrieb wieder aufgenommen. Im Falle eines tatsächlichen Defektes in einem der Sensorkreise, der zur Signalisierung eines statischen Betätigungszustandes führt, wird T_{L} stets überschritten, das Freigabesignal dauerhaft unterdrückt und somit der Fehler erkennbar und die Sicherheit gewährleistet.

Die Fig. 8 illustriert ein schematisches Ablaufdiagramm eines Ausführungsbeispiels eines Verfahrens zum Betreiben eines Sicherheitsschaltgeräts zum Freischalten einer vorbestimmten Maschinenoperation einer elektrisch gesteuerten Maschine.

In Schritt S1 werden eine erste Betätigungsinformation, welche von einem von einem ersten Sensor zum Detektieren eines Betätigungszustands des Sicherheitsschaltgeräts bereitgestellten ersten Sensorsignals abgeleitet wird, und eine zweite Betätigungsinformation, welche von einem von einem zweiten Sensor zum Detektieren des Betätigungszustands des Sicherheitsschaltgeräts bereitgestellten zweiten Sensorsignals abgeleitet wird, durch einen ersten Erfassungsbaustein erfasst.

In Schritt S2 werden die erste Betätigungsinformation und die zweite Betätigungsinformation durch einen zweiten Erfassungsbaustein erfasst.

In Schritt S3 werden Freischaltinformationen durch den ersten Erfassungsbaustein und durch den zweiten Erfassungsbaustein zum Ansteuern einer jeweiligen Ausgangsschaltstufe zumindest innerhalb eines definiert begrenzten zeitlichen Versatzes ausgegeben, wenn der erste Erfassungsbaustein und der zweite Erfassungsbaustein eine bestimmte Änderung der ersten Betätigungsinformation und die bestimmte Änderung der zweiten Betätigungsinformation unmittelbar aufeinander folgend detektieren.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar.

### BEZUGSZEICHENLISTE

- 1: Zustimmvorrichtung
- 2: Zustimmtaster
- 3: Roboter
- 4: Sicherheitsschaltgerät
- 5: Schaltmechanik, Betätigungselement
- 6, 7: Sensor, Signalgeber
- 8: Auswerteschaltung, Auswerteeinheit
- 9, 10: Sensorsignal, Signal
- 11, 12: Diskriminierungseinheit
- 13, 14: Betätigungssignal, Betätigungsinformation
- 15, 16: Erfassungsbausteine
- 17, 18: Freischaltinformation
- 19, 20: Ausgangsschaltstufe
- 21, 22, 23: Schnittstelle
- 24, 25: Mikrokontroller
- 26: Griffbereich
- 27: Datenschnittstelle
- R: erste Position, Ruheposition
- Z: zweite Position, Zustimmposition
- P: dritte Position, Panikposition

## Patentansprüche

1. Elektronische Auswerteeinheit (8) für ein Sicherheitsschaltgerät (4) zum Freischalten einer vorbestimmten gefahrbringenden Maschinenoperation einer elektrisch gesteuerten Maschine (3), mit:
einem ersten Erfassungsbaustein (15) zum Erfassen einer ersten Betätigungsinformation (13), welche von einem von einem ersten Sensor (6) zum Detektieren eines Betätigungszustands des Sicherheitsschaltgeräts (4) bereitgestellten ersten Sensorsignal (9) abgeleitet wird, und zum Erfassen einer zweiten Betätigungsinformation (14), welche von einem von einem zweiten Sensor (7) zum Detektieren des Betätigungszustands des Sicherheitsschaltgeräts (4) bereitgestellten zweiten Sensorsignal (10) abgeleitet wird, und
einem zweiten Erfassungsbaustein (16) zum Erfassen der ersten Betätigungsinformation (13) und der zweiten Betätigungsinformation (14),
**dadurch gekennzeichnet, dass**
der erste Sensor (6) und der zweite Sensor (7) einem Betätigungselement (5) zugeordnet sind, und
dass der erste Erfassungsbaustein (15) und der zweite Erfassungsbaustein (16) derart eingerichtet sind, dass der erste Erfassungsbaustein (15) und der zweite Erfassungsbaustein (16) eine jeweilige Freischaltinformation (17, 18) zum Ansteuern einer jeweiligen Ausgangsschaltstufe (19, 20) zumindest innerhalb eines definiert begrenzten zeitlichen Versatzes ausgeben, wenn der erste Erfassungsbaustein (15) und der zweite Erfassungsbaustein (16) eine bestimmte Änderung der ersten Betätigungsinformation (13) und die bestimmte Änderung der zweiten Betätigungsinformation (14) unmittelbar aufeinanderfolgend detektieren.

2. Elektronische Auswerteeinheit nach Anspruch 1,
**gekennzeichnet durch**
eine erste Diskriminierungseinheit (11) zum Ausgeben der ersten Betätigungsinformation (13) in Abhängigkeit des ersten Sensorsignals (9) des ersten Sensors (6), und eine zweiten Diskriminierungseinheit (12) zum Ausgeben der zweiten Betätigungsinformation (14) in Abhängigkeit des zweiten Sensorsignals (10) des zweiten Sensors (7).

3. Elektronische Auswerteeinheit nach Anspruch 1 oder 2,
**dadurch gekennzeichnet,**
**dass** der erste Erfassungsbaustein (15) und der zweite Erfassungsbaustein (16) dazu eingerichtet sind, die Freischaltinformationen (17, 18) zum Ansteuern der Ausgangsschaltstufen (19, 20) basierend auf denselben logischen Regeln innerhalb des definiert begrenzten zeitlichen Versatzes auszugeben.

4. Elektronische Auswerteeinheit nach einem der Ansprüche 1 bis 3,
**dadurch gekennzeichnet,**
**dass** der erste Erfassungsbaustein (15) und der zweite Erfassungsbaustein (16) dazu eingerichtet sind, die Freischaltinformationen (17, 18) zum Ansteuern der Ausgangsschaltstufen (19, 20) nur dann auszugeben, wenn der erste Erfassungsbaustein (15) und der zweite Erfassungsbaustein (16) die bestimmte Änderung der ersten Betätigungsinformation (13) und die bestimmte Änderung der zweiten Betätigungsinformation (14) unmittelbar aufeinander folgend innerhalb einer vorgegebenen Zeitspanne detektieren.

5. Elektronische Auswerteeinheit nach einem der Ansprüche 1 bis 4,
**dadurch gekennzeichnet,**
**dass** der erste Erfassungsbaustein (15) und der zweite Erfassungsbaustein (16) unterschiedlichen Typs sind.

6. Elektronische Auswerteeinheit nach einem der Ansprüche 1 bis 5,
**dadurch gekennzeichnet,**
**dass** jeweils eine Diskriminierungseinheit (11, 12) und ein Erfassungsbaustein (15, 16) baulich miteinander verbunden sind.

7. Elektronische Auswerteeinheit nach einem der Ansprüche 1 bis 6,
**dadurch gekennzeichnet,**
**dass** wenigstens eine der Diskriminierungseinheiten (11, 12) eine Plausibilitätsprüfung für das jeweils vom Sensor (6, 7) eingehende Sensorsignal (9, 10) durchführt und beim Vorliegen eines nicht plausiblen, unzulässigen oder fehlerhaften Sensorsignals (9, 10) eine Fehlermeldung oder ein Fehlersignal generiert.

8. Elektronische Auswerteeinheit nach einem der Ansprüche 1 bis 7,
**dadurch gekennzeichnet,**
**dass** wenigstens eine der Diskriminierungseinheiten (11, 12) einen Selbsttest der elektronischen Auswerteeinheit (8) durch eine Dynamisierung der Sensorsignale (9, 10) und der den Sensorsignalen (9, 10) zugeordneten Signaleingänge an den Diskriminierungseinheiten (11, 12) ausführt, wobei die Dynamisierung ein periodisches Abschalten der empfangenen Sensorsignale (9, 10) oder einer Versorgungsspannung der Sensoren (6, 7) aufweist.

9. Elektronische Auswerteeinheit nach einem der Ansprüche 1 bis 8,
**dadurch gekennzeichnet,**
**dass** wenigstens einer der Erfassungsbausteine (15, 16) eine Datenschnittstelle (27) aufweist, über die Informationen ausgebbar sind.

10. Elektronische Auswerteeinheit nach einem der Ansprüche 1 bis 9,
**dadurch gekennzeichnet,**
**dass** das Sicherheitsschaltgerät (4) zumindest ein von einer Bedienperson manuell beeinflussbares Betätigungselement (5) aufweist, welches dazu eingerichtet ist, ohne Einwirkung einer Betätigungskraft auf das Betätigungselement (5) selbsttätig einen ersten Betätigungszustand (R) einzunehmen, ausgehend vom ersten Betätigungszustand (R) durch manuelle Verstellung des Betätigungselementes (5) und/oder durch Erhöhung der Betätigungskraft auf das Betätigungselement (5) einen zweiten Betätigungszustand (Z) einzunehmen, und ausgehend vom zweiten Betätigungszustand (Z) durch fortgesetzte manuelle Verstellung des Betätigungselementes (5) und/oder Erhöhung der Betätigungskraft auf das Betätigungselement (5) einen dritten Betätigungszustand (P) einzunehmen.

11. Elektronische Auswerteeinheit nach Anspruch 2 und 10,
**dadurch gekennzeichnet,**
**dass** der erste Sensor (6) mechanische Kontakte aufweist, wobei die erste Diskriminierungseinheit (11) zur Erfassung und Unterscheidung des ersten, zweiten und dritten Betätigungszustandes (R, Z, P) und Bildung einer korrespondierenden ersten Betätigungsinformation (13) geeignet ist,
**dass** der zweite Sensor (7) mechanische Kontakte aufweist, wobei die zweite Diskriminierungseinheit (12) zur Erfassung und Unterscheidung des ersten, zweiten und dritten Betätigungszustandes (R, Z, P) und Bildung einer korrespondierenden zweiten Betätigungsinformation (14) geeignet ist.

12. Elektronische Auswerteeinheit nach einem der Ansprüche 10 oder 11,
**dadurch gekennzeichnet,**
**dass** die bestimmte Änderung der ersten Betätigungsinformation (13) und der zweiten Betätigungsinformation (14) jeweils der Übergang vom ersten Betätigungszustand (R) in den zweiten Betätigungszustand (Z) ist.

13. Sicherheitsschaltgerät (4) zum Freischalten einer vorbestimmten Maschinenoperation einer elektrisch gesteuerten Maschine (3), mit:
wenigstens einem von einer Bedienperson manuell zu betätigenden Betätigungselement (5), wobei das Betätigungselement (5) dazu eingerichtet ist, ohne Einwirkung einer Betätigungskraft auf das Betätigungselement (5) selbsttätig einen ersten Betätigungszustand (R) einzunehmen, ausgehend vom ersten Betätigungszustand (R) durch manuelle Verstellung des Betätigungselementes (5) und/oder durch Erhöhung der Betätigungskraft auf das Betätigungselement (5) einen zweiten Betätigungszustand (Z) einzunehmen, und ausgehend vom zweiten Betätigungszustand (Z) durch fortgesetzte manuelle Verstellung des Betätigungselementes (5) und/oder Erhöhung der Betätigungskraft auf das Betätigungselement (5) einen dritten Betätigungszustand (P) einzunehmen,
einem ersten Sensor (6) zum Detektieren des Betätigungszustandes des Sicherheitsschaltgerätes (4), welcher in Abhängigkeit des detektierten Betätigungszustandes ein erstes Sensorsignal (9) einem ersten Erfassungsbaustein (15) bereitstellt, wobei der erste Sensor (6) dem Betätigungselement (5) zugeordnet ist,
einem zweiten Sensor (7) zum Detektieren des Betätigungszustandes des Sicherheitsschaltgerätes (4), welcher ein zweites Sensorsignal (10) in Abhängigkeit des detektierten Betätigungszustandes einem zweiten Erfassungsbaustein (16) bereitstellt, wobei der zweite Sensor (7) dem Betätigungselement (5) zugeordnet ist, und
einer elektronischen Auswerteeinheit (8) nach einem der vorstehenden Ansprüche.

14. Sicherheitsschaltgerät nach Anspruch 13,
**dadurch gekennzeichnet,**
**dass** das Sicherheitsschaltgerät (4) wenigstens zwei von der Bedienperson manipulierbare Betätigungselemente (5) aufweist, wobei die wenigstens zwei Betätigungselemente (5) so angeordnet sind, dass das erste und das zweite Betätigungselement (5) vom Bediener mit einer Hand gleichzeitig und gleichwirkend betätigbar sind.

15. Sicherheitsschaltgerät nach Anspruch 14,
**dadurch gekennzeichnet,**
**dass** ein zweiter Satz von Sensoren (6, 7) dem zweiten Betätigungselement (5) zugeordnet ist.

16. Verfahren zum Betreiben eines Sicherheitsschaltgerät (4) zum Freischalten einer vorbestimmten gefahrbringenden Maschinenoperation einer elektrisch gesteuerten Maschine (3), mit den Schritten:
Erfassen einer ersten Betätigungsinformation (13), welche von einem von einem ersten Sensor (6) zum Detektieren eines Betätigungszustands des Sicherheitsschaltgeräts (4) bereitgestellten ersten Sensorsignal (9) abgeleitet wird, und zum Erfassen einer zweiten Betätigungsinformation (14), welche von einem von einem zweiten Sensor (7) zum Detektieren des Betätigungszustands des Sicherheitsschaltgeräts (4) bereitgestellten zweiten Sensorsignal (10) abgeleitet wird, durch einen ersten Erfassungsbaustein (15), wobei der erste Sensor (6) und der zweite Sensor (7) einem Betätigungselement (5) zugeordnet ist,
Erfassen der ersten Betätigungsinformation (13) und der zweiten Betätigungsinformation (14) durch einen zweiten Erfassungsbaustein (16),
**gekennzeichnet durch** den Schritt:
Ausgeben einer jeweilige Freischaltinformation (17, 18) **durch** den ersten Erfassungsbaustein (15) und **durch** den zweiten Erfassungsbaustein (16) zum Ansteuern einer jeweiligen Ausgangsschaltstufe (19, 20) zumindest innerhalb eines definiert begrenzten zeitlichen Versatzes, wenn der erste Erfassungsbaustein (15) und der zweite Erfassungsbaustein (16) eine bestimmte Änderung der ersten Betätigungsinformation (13) und die bestimmte Änderung der zweiten Betätigungsinformation (14) unmittelbar aufeinander folgend detektieren,
wobei der erste Sensor (6) und der zweite Sensor (7) einem Betätigungselement (5) zugeordnet sind.

## Claims

1. Electronic evaluation unit (8) for a safety switching device (4) for unlocking a predetermined dangerous machine operation of an electrically controlled machine (3), comprising:
a first acquisition module (15) for acquiring a first item of operating information (13), which is derived from a first sensor signal (9) provided by a first sensor (6) for detecting an operating state of the safety switching device (4), and for acquiring a second item of operating information (14), which is derived from a second sensor signal (10) provided by a second sensor (7) for detecting the operating state of the safety switching device (4),
and
a second acquisition module (16) for acquiring the first item of operating information (13) and the second item of operating information (14),
**characterized in that**
the first sensor (6) and the second sensor (7) are assigned to an operating element (5), and
**in that** the first acquisition module (15) and the second acquisition module (16) are configured in such a way that the first acquisition module (15) and the second acquisition module (16) output a respective item of unlock information (17, 18) to actuate a respective output switching stage (19, 20) at least within a time offset, which is limited in a defined manner, when the first acquisition module (15) and the second acquisition module (16) detect a specific change in the first item of operating information (13) and the specific change in the second item of operating information (14) in a manner succeeding one another directly.

2. Electronic evaluation unit according to Claim 1,
**characterized by**
a first discrimination unit (11) for outputting the first item of operating information (13) depending on the first sensor signal (9) of the first sensor (6), and a second discrimination unit (12) for outputting the second item of operating information (14) depending on the second sensor signal (10) of the second sensor (7).

3. Electronic evaluation unit according to Claim 1 or 2,
**characterized in that**
the first acquisition module (15) and the second acquisition module (16) are configured to output the items of unlock information (17, 18) to actuate the output switching stages (19, 20) based on the same logical rules within the time offset, which is limited in a defined manner.

4. Electronic evaluation unit according to one of Claims 1 to 3,
**characterized in that**
the first acquisition module (15) and the second acquisition module (16) are configured to output the items of unlock information (17, 18) to actuate the output switching stages (19, 20) only when the first acquisition module (15) and the second acquisition module (16) detect the specific change in the first item of operating information (13) and the specific change in the second item of operating information (14) in a manner succeeding one another directly within a prescribed period.

5. Electronic evaluation unit according to one of Claims 1 to 4,
**characterized in that**
the first acquisition module (15) and the second acquisition module (16) are of a different type.

6. Electronic evaluation unit according to one of Claims 1 to 5,
**characterized in that**
a respective discrimination unit (11, 12) and a respective acquisition module (15, 16) are physically connected to one another.

7. Electronic evaluation unit according to one of Claims 1 to 6,
**characterized in that**
at least one of the discrimination units (11, 12) carries out a plausibility check for the sensor signal (9, 10) respectively incoming from the sensor (6, 7) and, in the presence of an implausible, impermissible or faulty sensor signal (9, 10), generates a fault message or a fault signal.

8. Electronic evaluation unit according to one of Claims 1 to 7,
**characterized in that**
at least one of the discrimination units (11, 12) performs a self-test of the electronic evaluation unit (8) by dynamization of the sensor signals (9, 10) and of the signal inputs assigned to the sensor signals (9, 10) at the discrimination units (11, 12), wherein the dynamization comprises a periodic switch-off of the received sensor signals (9, 10) or of a supply voltage of the sensors (6, 7).

9. Electronic evaluation unit according to one of Claims 1 to 8,
**characterized in that**
at least one of the acquisition modules (15, 16) comprises a data interface (27), by means of which the items of information can be output.

10. Electronic evaluation unit according to one of Claims 1 to 9,
**characterized in that**
the safety switching device (4) comprises at least one operating element (5), which can be manually influenced by an operator and which is configured to assume a first operating state (R) automatically without the impact of an operating force on the operating element (5), to assume a second operating state (Z) proceeding from the first operating state (R) by manual adjustment of the operating element (5) and/or by increasing the operating force on the operating element (5), and to assume a third operating state (P) proceeding from the second operating state (Z) by continued manual adjustment of the operating element (5) and/or by increasing the operating force on the operating element (5).

11. Electronic evaluation unit according to Claim 2 and 10,
**characterized in that**
the first sensor (6) comprises mechanical contacts, wherein the first discrimination unit (11) is suitable for acquiring and differentiating the first, second and third operating states (R, Z, P) and forming a corresponding first item of operating information (13), **in that** the second sensor (7) comprises mechanical contacts, wherein the second discrimination unit (12) is suitable for acquiring and differentiating the first, second and third operating states (R, Z, P) and forming a corresponding second item of operating information (14).

12. Electronic evaluation unit according to either of Claims 10 and 11,
**characterized in that**
the specific change in the first item of operating information (13) and the second item of operating information (14) is in each case the transition from the first operating state (R) to the second operating state (Z).

13. Safety switching device (4) for unlocking a predetermined machine operation of an electrically controlled machine (3), comprising:
at least one operating element (5) to be manually operated by an operator, wherein the operating element (5) is configured to assume a first operating state (R) automatically without the impact of an operating force on the operating element (5), to assume a second operating state (Z) proceeding from the first operating state (R) by manual adjustment of the operating element (5) and/or by increasing the operating force on the operating element (5), and to assume a third operating state (P) proceeding from the second operating state (Z) by continued manual adjustment of the operating element (5) and/or by increasing the operating force on the operating element (5),
a first sensor (6) for detecting the operating state of the safety switching device (4), which provides a first sensor signal (9) to a first acquisition module (15) depending on the detected operating state, wherein the first sensor (6) is assigned to the operating element (5),
a second sensor (7) for detecting the operating state of the safety switching device (4), which provides a second sensor signal (10) to a second acquisition module (16) depending on the detected operating state, wherein the second sensor (7) is assigned to the operating element (5), and
an electronic evaluation unit (8) according to one of the preceding claims.

14. Safety switching device according to Claim 13,
**characterized in that**
the safety switching device (4) comprises at least two operating elements (5) that can be manipulated by the operator, wherein the at least two operating elements (5) are arranged so that the first and the second operating element (5) can be operated at the same time and to the same effect by the operator using one hand.

15. Safety switching device according to Claim 14,
**characterized in that**
a second set of sensors (6, 7) are assigned to the second operating element (5).

16. Method for operating a safety switching device (4) for unlocking a predetermined dangerous machine operation of an electrically controlled machine (3), comprising the following steps:
acquisition of a first item of operating information (13), which is derived from a first sensor signal (9) provided by a first sensor (6) for detecting an operating state of the safety switching device (4) and for acquisition of a second item of operating information (14), which is derived from a second sensor signal (10) provided by a second sensor (7) for detecting the operating state of the safety switching device (4) by way of a first acquisition module (15), wherein the first sensor (6) and the second sensor (7) is assigned to an operating element (5),
acquisition of the first item of operating information (13) and the second item of operating information (14) by way of a second acquisition module (16),
**characterized by** the following step:
output of a respective item of unlock information (17, 18) by way of the first acquisition module (15) and by way of the second acquisition module (16) to actuate a respective output switching stage (19, 20) at least within a time offset, which is limited in a defined manner, when the first acquisition module (15) and the second acquisition module (16) detect a specific change in the first item of operating information (13) and the specific change in the second item of operating information (14) in a manner succeeding one another directly,
wherein the first sensor (6) and the second sensor (7) are assigned to an operating element (5).

## Revendications

1. Unité d'évaluation électronique (8) d'un appareil de commutation de sécurité (4) pour le déclenchement d'une opération de machine dangereuse prédéterminée d'une machine à commande électrique (3), comportant :
un premier module de détection (15) destiné à détecter une première information d'actionnement (13) qui est dérivée d'un premier signal de capteur (9) fourni par un premier capteur (6) destiné à détecter un état d'actionnement de l'appareil de commutation de sécurité (4), et à détecter une deuxième information d'actionnement (14) dérivée d'un deuxième signal de capteur (10) fourni par un deuxième capteur (7) destiné à détecter l'état d'actionnement de l'appareil de commutation de sécurité (4), et
un deuxième module de détection (16) destiné à détecter la première information d'actionnement (13) et la deuxième information d'actionnement (14),
**caractérisé en ce que** le premier capteur (6) et le deuxième capteur (7) sont associés à un élément d'actionnement (5), et **en ce que** le premier module de détection (15) et le deuxième module de détection (16) sont conçus de manière à ce que le premier module de détection (15) et le deuxième module de détection (16) délivrent une information de déclenchement respective (17, 18) pour commander un étage de commutation de sortie respectif (19, 20) au moins au cours d'un décalage de temps défini limité, lorsque le premier module de détection (15) et le deuxième module de détection (16) détectent une modification déterminée de la première information d'actionnement (13) et la modification déterminée de la deuxième information d'actionnement (14) se suivant immédiatement l'une l'autre.

2. Unité d'évaluation électronique selon la revendication 1,
**caractérisée par** une première unité de discrimination (11) destinée à délivrer la première information d'actionnement (13) en fonction du premier signal de capteur (9) du premier capteur (6), et une deuxième unité de discrimination (12) destinée à délivrer la deuxième information d'actionnement (14) en fonction du deuxième signal de capteur (10) du deuxième capteur (7).

3. Unité d'évaluation électronique selon la revendication 1 ou 2,
**caractérisée en ce que** le premier module de détection (15) et le deuxième module de détection (16) sont conçus pour délivrer les informations de déclenchement (17, 18) destinées à commander les étages de commutation de sortie (19, 20) sur la base des mêmes règles logiques au cours du décalage de temps défini limité.

4. Unité d'évaluation électronique selon l'une quelconque des revendications 1 à 3,
**caractérisée en ce que** le premier module de détection (15) et le deuxième module de détection (16) sont conçus pour délivrer les informations de déclenchement (17, 18) destinées à commander les étages de commutation de sortie (19, 20) uniquement lorsque le premier module de détection (15) et le deuxième module de détection (16) détectent la modification déterminée de la première information d'actionnement (13) et la modification déterminée de la deuxième information d'actionnement (14) se suivant immédiatement l'une l'autre au cours d'un intervalle de temps prédéterminé.

5. Unité d'évaluation électronique selon l'une quelconque des revendications 1 à 4,
**caractérisée en ce que** le premier module de détection (15) et le deuxième module de détection (16) sont de types différents.

6. Unité d'évaluation électronique selon l'une quelconque des revendications 1 à 5,
**caractérisée en ce qu'**une unité de discrimination (11, 12) et un module de détection (15, 16) sont structurellement reliés l'un à l'autre.

7. Unité d'évaluation électronique selon l'une quelconque des revendications 1 à 6,
**caractérisée en ce qu'**au moins l'une des unités de discrimination (11, 12) effectue un test de plausibilité sur le signal de capteur (9, 10) provenant respectivement du capteur (6, 7) et génère un message d'erreur ou un signal d'erreur en présence d'un signal de capteur (9, 10) non plausible, non autorisé ou erroné.

8. Unité d'évaluation électronique selon l'une quelconque des revendications 1 à 7,
**caractérisée en ce qu'**au moins l'une des unités de discrimination (11, 12) effectue un autotest de l'unité d'évaluation électronique (8) par dynamisation des signaux de capteurs (9, 10) et des entrées de signaux, qui sont associées aux signaux de capteurs (9, 10), des unités de discrimination (11, 12), la dynamisation comportant une déconnexion périodique des signaux de capteurs (9, 10) reçus ou d'une tension d'alimentation des capteurs (6, 7).

9. Unité d'évaluation électronique selon l'une quelconque des revendications 1 à 8,
**caractérisée en ce qu'**au moins l'un des modules de détection (15, 16) comporte une interface de données (27) par l'intermédiaire de laquelle des informations peuvent être délivrées.

10. Unité d'évaluation électronique selon l'une quelconque des revendications 1 à 9,
**caractérisée en ce que** l'appareil de commutation de sécurité (4) comporte au moins un élément d'actionnement (5) qui peut être influencé manuellement par un opérateur et qui est conçu pour passer automatiquement dans un premier état d'actionnement (R) sans application d'une force d'actionnement sur l'élément d'actionnement (5), pour passer dans un deuxième état d'actionnement (Z) à partir du premier état d'actionnement (R) par réglage manuel de l'élément d'actionnement (5) et/ou par augmentation de la force d'actionnement exercée sur l'élément d'actionnement (5), et pour passer dans un troisième état d'actionnement (P) à partir du deuxième état d'actionnement (Z) par poursuite du réglage manuel de l'élément d'actionnement (5) et/ou par augmentation de la force d'actionnement exercée sur l'élément d'actionnement (5).

11. Unité d'évaluation électronique selon l'une quelconque des revendications 2 et 10,
**caractérisée en ce que** le premier capteur (6) comporte des contacts mécaniques, la première unité de discrimination (11) étant conçue pour détecter et discriminer les premier, deuxième et troisième états d'actionnement (R, Z, P) et établir une première information d'actionnement correspondante (13),
**en ce que** le deuxième capteur (7) comporte des contacts mécaniques, la deuxième unité de discrimination (12) étant conçue pour détecter et discriminer les premier, deuxième et troisième états d'actionnement (R, Z, P) et établir une deuxième information d'actionnement correspondante (14).

12. Unité d'évaluation électronique selon l'une quelconque des revendications 10 ou 11,
**caractérisée en ce que** la modification déterminée de la première information d'actionnement (13) et de la deuxième information d'actionnement (14) est respectivement le passage du premier état d'actionnement (R) au deuxième état d'actionnement (Z).

13. Appareil de commutation de sécurité (4) permettant de déclencher une opération de machine prédéterminée d'une machine à commande électrique (3), comportant :
au moins un élément d'actionnement (5) devant être actionné manuellement par un opérateur, l'élément d'actionnement (5) étant conçu pour passer automatiquement dans un premier état d'actionnement (R) sans action d'une force d'actionnement sur l'élément d'actionnement (5), pour passer dans un deuxième état d'actionnement (Z) à partir du premier état d'actionnement (R) par réglage manuel de l'élément d'actionnement (5) et/ou par augmentation de la force d'actionnement exercée sur l'élément d'actionnement (5),
et pour passer dans un troisième état d'actionnement (P) à partir du deuxième état d'actionnement (Z) par poursuite du réglage manuel de l'élément d'actionnement (5) et/ou par augmentation de la force d'actionnement exercée sur l'élément d'actionnement (5),
un premier capteur (6) destiné à détecter l'état d'actionnement de l'appareil de commutation de sécurité (4), qui fournit un premier signal de capteur (9) à un premier module de détection (15) en fonction de l'état d'actionnement détecté, le premier capteur (6) étant associé à l'élément d'actionnement (5),
un deuxième capteur (7) destiné à détecter l'état d'actionnement de l'appareil de commutation de sécurité (4), qui fournit un deuxième signal de capteur (10) à un deuxième module de détection (16) en fonction de l'état d'actionnement détecté, le deuxième capteur (7) étant associé à l'élément d'actionnement (5), et
une unité d'évaluation électronique (8) selon l'une quelconque des revendications ci-dessus.

14. Appareil de commutation de sécurité selon la revendication 13,
**caractérisé en ce que** l'appareil de commutation de sécurité (4) comporte au moins deux éléments d'actionnement (5) qui peuvent être manipulés par l'opérateur, les au moins deux éléments d'actionnement (5) étant disposés de telle sorte que les premier et deuxième éléments d'actionnement (5) puissent être actionnés d'une main simultanément et avec le même effet par l'opérateur.

15. Appareil de commutation de sécurité selon la revendication 14, **caractérisé en ce qu'**un deuxième jeu de capteurs (6, 7) est associé au deuxième élément de commande (5).

16. Procédé pour faire fonctionner un appareil de commutation de sécurité (4) pour le déclenchement d'une opération de machine dangereuse prédéterminée d'une machine à commande électrique (3), comprenant les étapes suivantes :
la détection par un premier module de détection (15) une première information d'actionnement (13) dérivée d'un premier signal de capteur (9) fourni par un premier capteur (6) destiné à détecter un état d'actionnement de l'appareil de commutation de sécurité (4), et détecter une deuxième information d'actionnement (14) dérivée d'un deuxième signal de capteur (10) fourni par un deuxième capteur (7) destiné à détecter l'état d'actionnement de l'appareil de commutation de sécurité (4), le premier capteur (6) et le deuxième capteur (7) étant associés à un élément d'actionnement (5),
la détection par un deuxième module de détection (16) de la première information d'actionnement (13) et de la deuxième information d'actionnement (14),
**caractérisé par** l'étape suivante :
la délivrance d'une information de déclenchement respective (17, 18) par le premier module de détection (15) et par le deuxième module de détection (16) pour commander un étage de commutation de sortie respectif (19, 20) au moins au cours d'un décalage de temps limité défini, lorsque le premier module de détection (15) et le deuxième module de détection (16) détectent une modification déterminée de la première information d'actionnement (13) et la modification déterminée de la deuxième information d'actionnement (14) se suivant immédiatement l'une l'autre,
le premier capteur (6) et le deuxième capteur (7) étant associés à un élément d'actionnement (5).
